# EUROPEAN PATENT APPLICATION

(11) **EP 1 548 260 A2**
(43) Date of publication of application: **29.06.2005**
(21) Application number: 04024552.4
(22) Date of filing: 14.10.2004
(51) Int. Cl.: F02D 41/22, F02D 23/00, F02B 37/00, F02B 29/04, F02B 77/08

(54) **Abnormality determination device for engine system**

(30) Priority: 26.12.2003 JP 2003434243
(71) Applicant: Toyota Jidosha Kabushiki Kaisha, Toyota-shi, Aichi-ken 471-8571 (JP)
(72) Inventor: Kobayashi, Masaaki, Toyota-shi Aichi-ken 471-8571 (JP); Tsuzuki, Naoyuki, Toyota-shi Aichi-ken 471-8571 (JP); Yamaguchi, Masaaki, Toyota-shi Aichi-ken 471-8571 (JP)
(74) Representative: Leson, Thomas Johannes Alois, Dipl.-Ing.

(57) **Abstract**

An ECU carries out a program including the step (S100) of detecting a discharge air temperature TC and obtaining an estimated discharge air temperature TC(X) using an estimated discharge air temperature map, the step (S400) of setting a turbo abnormality determination flag when the discharge air temperature TC is higher than the estimated discharge air temperature TC(X) (YES in S300), the step (S500) of detecting an intake air temperature TIM, the step (S600) of calculating cooling efficiency of an intercooler from the discharge air temperature TC and the intake air temperature TIM, and the step (S800) of setting an intercooler abnormality determination flag when the cooling efficiency of the intercooler is decreased (YES in S700).

## Description

### BACKGROUND OF THE INVENTION

### Field of the Invention

The present invention relates to an abnormality determination device for an engine system, and more particularly to an abnormality determination device for an engine system that is provided with a turbocharger having a compressor connected to a turbine driven by exhaust gas from an engine and for compressing air to be supplied to the engine.

### Description of the Background Art

A turbocharger is conventionally known, which uses a compressor to compress and charge the air to an engine, to thereby improve the power output of the engine. The turbocharger is operated so that the air of a desired boost pressure is supplied to the engine.

Japanese Patent Laying-Open No. 10-47071 discloses a variable nozzle type turbocharger, which controls a nozzle opening degree to achieve an optimal boost pressure corresponding to an operating state. The variable nozzle type turbocharger described in Japanese Patent Laying-Open No. 10-47071 includes a plurality of pivotable nozzle vanes, a turbine driven by the exhaust gas that is guided by a turbine nozzle formed between the nozzle vanes, and a compressor connected to the turbine. The opening degree, i.e., the area, of the turbine nozzle changes as the nozzle vanes are pivoted. When the opening degree of the turbine nozzle is decreased, the flow velocity and pressure of the exhaust gas increase. This increases kinetic energy applied to the turbine and hence to the compressor, leading to an increase of the boost pressure. On the contrary, when the opening degree of the turbine nozzle is increased, the flow velocity and pressure of the exhaust gas decrease, the kinetic energy applied to the turbine and the compressor decreases, and thus, the boost pressure is decreased.

According to the variable nozzle type turbocharger described therein, the nozzle opening degree is controlled to obtain a desired boost pressure.

In such a turbocharger, as the boost pressure by the compressor increases, the temperature of the compressed air discharged from the compressor also increases. The air compressed by the compressor may include air (e.g., blowby gas, exhaust gas leaked from a bearing of the turbocharger) sent from a crankcase, the turbocharger or the like, through a PCV (Positive Crankcase Ventilation) pipe, back to the upstream side of the compressor. The air contains oil mist of the lubricating oil in the engine and the turbocharger. When the temperature of the compressed air discharged from the compressor is high, the oil mist is carbonized and adheres to the vicinity of the discharge port of the compressor, leading to occurrence of caulking.

Such caulking reduces an area of the discharge port of the compressor, thereby increasing resistance of the passage through which the compressed air flows. As a consequence, the boost pressure is decreased, even if the compressor is driven at the same number of revolutions as before the occurrence of caulking. When the boost pressure is decreased, in order to obtain a target boost pressure, it is necessary, e.g., to decrease the nozzle opening degree to increase the number of revolutions of the compressor so as to compress an increased amount of air to a higher pressure. As a result, the temperature of the discharge air (temperature of the compressed air), and the numbers of revolutions of the turbine and the compressor will become too high, possibly leading to a breakdown of the turbocharger.

In general, a turbocharger is provided with an intercooler for cooling the compressed air discharged from the compressor. Clogging of the intercooler will also increase the resistance of the air passage, and, even if there is no caulking, the boost pressure will be decreased as in the case of occurrence of the caulking. In this case as well, in order to obtain a target boost pressure, the nozzle opening degree is decreased, for example, to increase the number of revolutions of the compressor so as to compress an increased amount of air to a higher pressure. This excessively increases the temperature of the discharge air (temperature of the compressed air) and the numbers of revolutions of the turbine and the compressor, again leading to a failure of the turbocharger.

As such, upon occurrence of an abnormality in the compressor due to caulking, or in the intercooler, the engine system requires repair and maintenance. Such caulking and clogging in the intercooler, however, cannot be checked visually from the outside. It is necessary to use, e.g., an ECU (Electronic Control Unit) to determine abnormalities of the compressor and the intercooler. Japanese Patent Laying-Open No. 10-47071 is completely silent about this issue.

### SUMMARY OF THE INVENTION

The present invention has been made to solve the above-described problems. An object of the present invention is to determine abnormalities of a compressor and an intercooler.

Another object of the present invention is to suppress an increase in temperature of the compressed air discharged from the compressor.

An abnormality determination device for an engine system according to an aspect of the present invention determines an abnormality of the engine system which includes a turbocharger having a compressor that is connected to a turbine driven by exhaust gas from an engine and compressing air to be supplied to the engine, and an intercooler cooling the compressed air discharged from the compressor. The abnormality determination device includes: a first detection unit provided between the compressor and the intercooler and detecting information about the air discharged from the compressor; a second detection unit provided between the intercooler and the engine and detecting information about the air cooled by the intercooler; a first determination unit determining an abnormality of the compressor based on the information detected by the first detection unit; and a second determination unit determining an abnormality of the intercooler based on the information detected by the first detection unit and the information detected by the second detection unit.

According to the invention, the first detection unit provided between the compressor and the intercooler detects the information (e.g., temperature) of the air discharged from the compressor, and the second detection unit provided between the intercooler and the engine detects the information (e.g., temperature) of the air cooled by the intercooler. The first determination unit determines that there is an abnormality in the compressor based on the information detected by the first detection unit when, e.g., the detected temperature is different from the temperature prestored as a map. The second determination unit determines that there is an abnormality in the intercooler based on the information detected by the first detection unit and the information detected by the second detection unit when, e.g., cooling efficiency of the intercooler calculated from the temperature detected by the first detection unit and the temperature detected by the second detection unit is decreased, or when, e.g., a temperature estimated from the temperature detected by the first detection unit differs from the temperature detected by the second detection unit. As such, it is possible to determine an abnormality of the compressor based on the information about the air discharged from the compressor, and to determine an abnormality of the intercooler based on the information about the air discharged from the compressor and the air cooled by the intercooler. As a result, the abnormalities of the compressor and the intercooler can be determined.

Preferably, the abnormality determination device for an engine system further includes: a storage unit prestoring information about air discharged from the compressor; and a comparison unit comparing the information detected by the first detection unit with the information stored in the storage unit. In this case, the first determination unit determines whether there is an abnormality in the compressor based on a result of the comparison by the comparison unit.

According to the invention, the storage unit prestores the information (e.g., information when the compressor is normal) about the air discharged from the compressor, and the comparison unit compares the information detected by the first detection unit with the information stored in the storage unit. The first determination unit determines whether there is an abnormality in the compressor based on the comparison result of the comparison unit. As such, it can be determined that the compressor is abnormal in the case where there actually is an abnormality in the compressor and, for example, the information detected by the first detection unit differs from the information prestored in the storage unit.

Still preferably, the abnormality determination device for an engine system further includes: an estimation unit estimating information about the air cooled by the intercooler based on the information detected by the first detection unit; and a comparison unit comparing the information detected by the second detection unit with the information estimated by the estimation unit. In this case, the second determination unit determines whether the intercooler is abnormal or not based on a result of the comparison by the comparison unit.

According to the invention, the estimation unit estimates the information (e.g., information when the intercooler is normal) about the air cooled by the intercooler based on the information detected by the first detection unit. The comparison unit compares the information estimated by the estimation unit with the information detected by the second detection unit, and the second determination unit determines whether the intercooler is abnormal or not based on the comparison result. As such, in the case where there actually occurs an abnormality in the intercooler and, for example, the information detected by the second detection unit differs from the estimated information, it can be determined that the intercooler is abnormal.

Still preferably, the abnormality determination device for an engine system further increases a calculation unit calculating cooling efficiency of the intercooler based on the information detected by the first detection unit and the information detected by the second detection unit. In this case, the second determination unit determines that the intercooler is abnormal when the cooling efficiency of the intercooler is decreased.

According to the invention, the information detected by the first detection unit and the information detected by the second detection unit are used to calculate the cooling efficiency of the intercooler, and the second determination unit determines that the intercooler is abnormal when the cooling efficiency of the intercooler is decreased. As such, in the case where the intercooler actually suffers an abnormality and the cooling efficiency of the intercooler is decreased, for example, it can be determined that the intercooler is abnormal.

Still preferably, each of the detection units detects at least one of a temperature and a pressure of the air.

According to the invention, at least one of a temperature and a pressure of the air is detected at each detection unit. When the detection unit detects a temperature of the air, abnormalities of the compressor and the intercooler can be determined using the temperature largely affecting, as well as affected by, the caulking. This enables accurate determination of the abnormalities of the compressor and the intercooler. When the detection unit detects a pressure of the air, the temperature of the air is calculated from the detected pressure. Using the calculated temperature also enables accurate determination of the abnormalities of the compressor and the intercooler.

Still preferably, the abnormality determination device for an engine system further includes a control unit controlling the engine system to lower the boost pressure by the compressor when it is determined that there is an abnormality in at least one of the compressor and the intercooler.

According to the invention, the control unit controls the engine system to lower the boost pressure by the compressor when it is determined that there is an abnormality in at least one of the compressor and the intercooler. As such, the boost pressure by the compressor is decreased when it is determined that at least one of the compressor and the intercooler is abnormal. When the boost pressure by the compressor is decreased, the increase in temperature of the air by compression is suppressed. As a result, it is possible to restrict the temperature increase of the compressed air discharged from the compressor.

Still preferably, the turbocharger is a variable nozzle type turbocharger driving the turbine by the exhaust gas that is guided by a nozzle having its opening degree changed according to an operating state of the engine system. The control unit controls the engine system to decrease the boost pressure by controlling the opening degree of the nozzle when it is determined that there is an abnormality in at least one of the compressor and the intercooler.

According to the invention, the control unit for example opens (increases) the nozzle opening degree of the variable nozzle type turbocharger that drives the turbine by the exhaust gas guided by the nozzle having its opening degree changed in accordance with the operating state of the engine system, so as to lower the boost pressure. When the nozzle opening degree is increased, the flow velocity and pressure of the exhaust gas exhausted from the engine decrease, which in turn decreases the number of revolutions of the turbine and hence the number of revolutions of the compressor, so that the boost pressure decreases. As such, it is possible to restrict the increase in temperature of the compressed air discharged from the compressor.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows an engine system according to a first embodiment of the present invention.
Fig. 2 shows a structure making a nozzle opening degree variable in a turbocharger provided in the engine system.
Fig. 3 is a normal VN opening degree map for determining a nozzle opening degree based on an engine revolution number NE and a fuel supply amount Q.
Fig. 4 is a target boost pressure map for determining a target boost pressure based on engine revolution number NE and fuel supply amount Q.
Fig. 5 is a corrected opening degree map for determining a correction value of the nozzle opening degree based on a difference ΔP(IM) between the target boost pressure and a boost pressure PIM.
Fig. 6 is an estimated discharge air temperature map showing the relation among engine revolution number NE, fuel supply amount Q and a discharge air temperature TC in the case where the compressor and the intercooler are normal.
Fig. 7 is an estimated discharge air temperature map showing the relation among an intake air amount GA, boost pressure PIM and discharge air temperature TC in the case where the compressor and the intercooler are normal.
Fig. 8 is a flowchart illustrating a control structure of a program carried out by the ECU in the first embodiment of the present invention.
Fig. 9 is an estimated intake air temperature map showing the relation between discharge air temperature TC and an intake air temperature TIM stored in a memory of an ECU according to a second embodiment of the present invention.
Fig. 10 is a flowchart illustrating a control structure of a program carried out by the ECU in the second embodiment of the present invention.

### DESCRIPTION OF THE PREFERRED EMBODIMENTS

Hereinafter, embodiments of the present invention will be described with reference to the drawings. In the following description, the same reference characters denote the same or corresponding portions having the same names and functions, and detailed description thereof will not be repeated where appropriate.

### First Embodiment

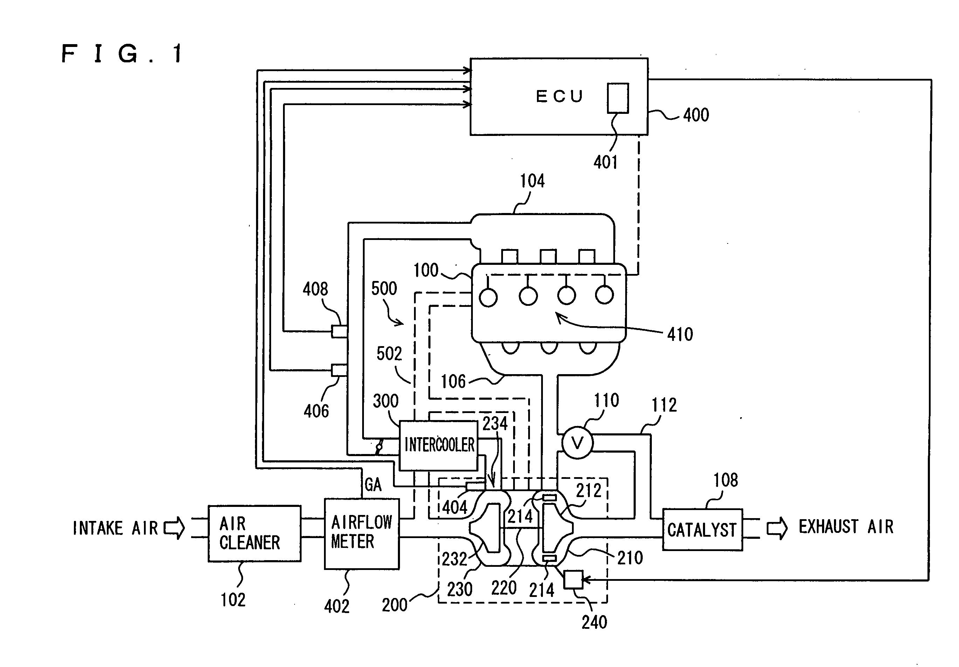

An abnormality determination device for an engine system according to a first embodiment of the present invention is described with reference to Fig. 1. The engine system includes an engine 100, a turbocharger 200, an intercooler 300, an ECU 400, and a PCV 500. The abnormality determination device for an engine system according to the present embodiment is implemented by a program carried out by ECU 400. This engine system is mounted to a vehicle such as an automobile.

Engine 100 includes an air cleaner 102, an intake manifold 104, an exhaust manifold 106, a catalyst 108, a waste gate valve 110, and an exhaust bypass 112.

The air introduced into the engine is filtered by air cleaner 102. The air filtered by air cleaner 102 is compressed by turbocharger 200 and cooled by intercooler 300. The air cooled by intercooler 300 is introduced into engine 100 via intake manifold 104 connected to the inlet side of cylinders of engine 100. The air mixed with a fuel and combusted in engine 100, i.e., the exhaust gas, is guided from exhaust manifold 106 connected to the outlet side of the cylinders of engine 100, via turbocharger 200 to catalyst 108. If there is a need to prevent the exhaust gas from flowing into turbocharger 200 in an excess amount, waste gate valve 110 is controlled to pass the exhaust gas through exhaust bypass 112. The exhaust gas flowing through bypass 112 is guided to catalyst 108 without passing through turbocharger 200. The exhaust gas is cleaned by catalyst 108 before being exhausted to the outside of the vehicle.

Turbocharger 200 includes a turbine 210, a shaft 220, a compressor 230, and an actuator 240. Turbocharger 200 is of a variable nozzle type having a nozzle opening degree changeable in accordance with the operating state of the engine (vehicle).

Turbine 210 includes a turbine rotor (also called a turbine wheel, a turbine blade or the like) 212 and nozzle vanes 214. Turbine rotor 212 is rotated by the exhaust gas. Nozzle vanes 214 can change the nozzle opening degree, i.e., the area, to change flow velocity and pressure of the exhaust gas driving turbine 210. Nozzle vanes 214 are driven by actuator 240.

Compressor 230 has a compressor blade 232 connected to turbine rotor 212 via shaft 220. Rotation of turbine rotor 212 by the exhaust gas causes rotation of compressor blade 232. Compressor blade 232 compresses (charges) the air filtered by air cleaner 102.

Intercooler 300 cools the air compressed by compressor 230 and increased in temperature. The volume of the cooled air is decreased compared to the volume before cooling, so that an increased amount of air is introduced into the engine.

Connected to ECU 400 are engine 100, actuator 240, an airflow meter 402, a discharge air temperature sensor 404, a boost pressure sensor 406, and an intake manifold temperature sensor 408. Airflow meter 402 detects an intake air amount GA. Discharge air temperature sensor 404 is provided in the vicinity of a discharge port 234 of compressor 230, and detects a temperature (discharge air temperature) TC of the air compressed by compressor 230 and having an increased temperature before being cooled by intercooler 300. Boost pressure sensor 406 is provided at intake manifold 104, and detects a pressure inside intake manifold 104, i.e., a boost pressure (intake air pressure) PIM. Intake manifold temperature sensor 408 is provided at intake manifold 104, and detects a temperature (intake air temperature) TIM of the air cooled by intercooler 300 and before being introduced into engine 100.

A discharge air pressure sensor (not shown) may be provided to detect a pressure of the air compressed by compressor 230 and having an increased temperature before being cooled by intercooler 300, instead of detecting discharge air temperature TC by discharge air temperature sensor 404. In this case, discharge air temperature TC may be calculated from the detected pressure and intake air amount GA.

ECU 400 controls the components such as actuator 240, an injector 410 and others to cause a fuel supply amount Q to engine 100, the nozzle opening degree and others to attain desired values, based on intake air amount GA, discharge air temperature TC, boost pressure PIM, intake air temperature TIM, and maps stored in a ROM (Read Only Memory) 401, so as to drive engine 100 at a desired revolution number NE. As such, the vehicle can run in a desired state.

PCV 500 causes the blowby gas accumulated in a crankcase of engine 100, the exhaust gas leaked from a bearing of turbocharger 200 and others to return to the upstream side of compressor 230 via a PCV pipe 502. The blowby gas and the exhaust gas leaked from the bearing of turbocharger 200 contain oil mist, which is the lubricating oil of engine 100 and turbocharger 200 mixed into the air in the state of fine particles. Thus, the air to be compressed by compressor 230 contains the oil mist.

The oil mist tends to be carbonized when discharge air temperature TC increases. The oil mist carbonized will adhere to the vicinity of discharge port 234 of compressor 230, resulting in occurrence of caulking. As the caulking occurs, the area of discharge port 234 of compressor 230 decreases, leading to increased resistance in the passage through which the compressed air flows. In this case, boost pressure PIM is decreased even if compressor 230 is driven at the same revolution number as that before occurrence of caulking. Thus, in order to obtain a target boost pressure, it is necessary to increase the number of revolutions of compressor 230 so as to compress an increased amount of air to a higher pressure. As a result, discharge air temperature TC will become too high, possibly leading to a malfunction or failure of turbocharger 200. Caulking will further proceed as well, and it becomes a vicious circle.

On the other hand, even with no caulking, if intercooler 300 is clogged, e.g., by impurities within the compressed air discharged from compressor 230, the resistance of the passage of the compressed air increases. This causes a decrease of boost pressure PIM, as in the case of occurrence of caulking. Thus, in order to obtain a target boost pressure, it is necessary to increase the number of revolutions of compressor 230 to compress an increased amount of air to a higher pressure. As a result, discharge air temperature TC becomes too high, causing caulking. The abnormality determination device for an engine system according to the present embodiment determines abnormalities in the compressor and in the intercooler.

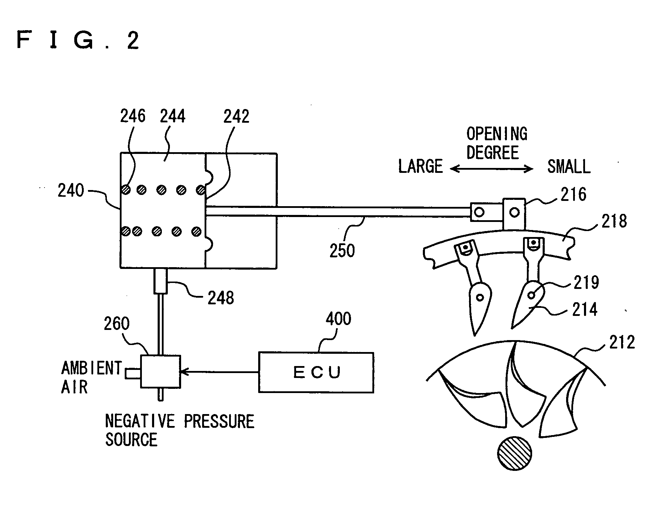

Turbocharger 200 is further described with reference to Fig. 2. A plurality of pivotable nozzle vanes 214 are provided in the gas passage at the turbine inlet guiding the exhaust gas to turbine rotor 212. The opening degree of the variable nozzle formed between nozzle vanes 214 can be adjusted by rotating a drive ring 218 via a link 216 that is connected to a rod 250 of actuator 240. In Fig. 2, when rod 250 is moved to the left, each nozzle vane 214 turns anticlockwise about a pin 219, and the nozzle opening degree, i.e., the area, formed between the nozzle vanes is increased (the nozzle opening degree is opened). On the other hand, when rod 250 is moved to the right, nozzle vanes 214 turn clockwise about pins 219, so that the nozzle opening degree is decreased (closed). As the nozzle opening degree decreases, the flow velocity and pressure of the exhaust gas increase. This increases the energy for driving turbine rotor 212, and the number of revolutions of turbine rotor 212, and hence, the number of revolutions of compressor blade 232 increases. As the revolution number of compressor blade 232 increases, boost pressure PIM increases, and an increased amount of air is introduced into engine 100. The increase of boost pressure PIM accompanies an increase of discharge air temperature TC.

Actuator 240 has a diaphragm chamber 244 partitioned by a diaphragm 242. Rod 250 is connected to this diaphragm 242. A spring 246 biases diaphragm 242 to a direction causing nozzle vanes 214 to close. Diaphragm chamber 244 has an inlet port 248 connected to a negative pressure control valve 260, which is in turn connected to ECU 400. The negative pressure to be introduced into diaphragm chamber 244 is adjusted based on a signal from ECU 400. In the present embodiment, the nozzle opening degree becomes minimum when the atmospheric pressure is introduced into diaphragm chamber 244.

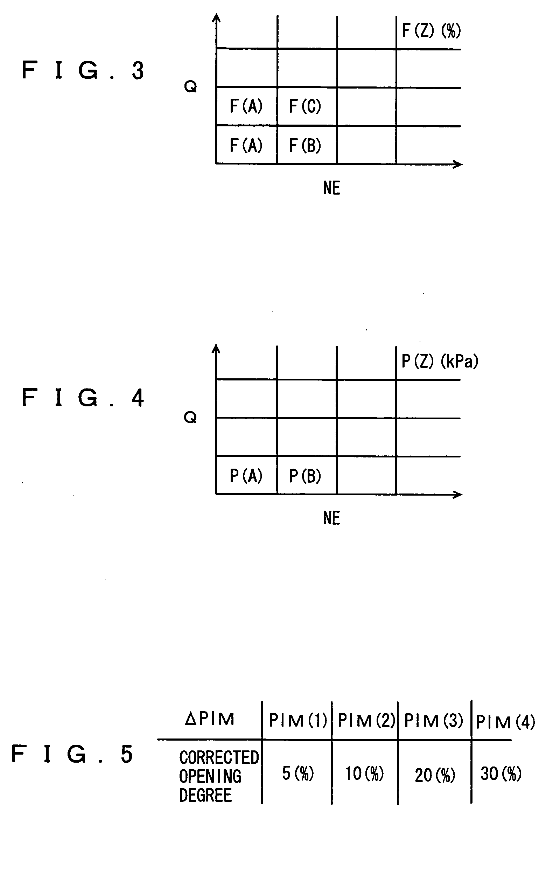

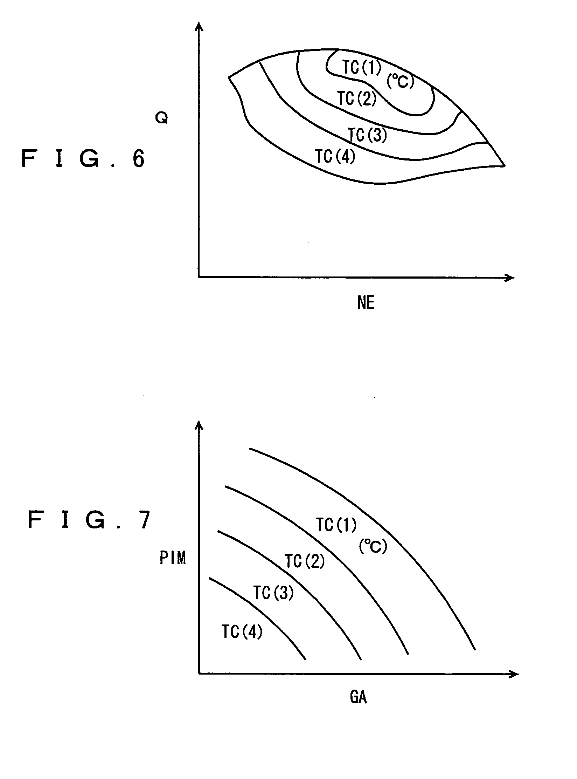

Hereinafter, maps stored in a memory 401 of ECU 400 in the abnormality determination device for an engine system according to the present embodiment will be described with reference to Figs. 3-7. Fig. 3 shows a map of normal VN (Variable Nozzle) opening degree. Fig. 4 shows a map of target boost pressure. Fig. 5 shows a map of corrected opening degree. Figs. 6 and 7 each show a map of estimated discharge air temperature.

The normal VN opening degree map shown in Fig. 3 determines the nozzle opening degree (F(A) > F(B) > F(C) > ... > F(Z)) based on an engine revolution number NE and a fuel supply amount Q. The smaller the nozzle opening degree, the greater the flow velocity and pressure of the compressed air discharged from compressor 230, leading to an increased boost pressure. It is noted that the nozzle opening degree has its minimum value F(Z), which limits the boost pressure. ECU 400 controls actuator 240 so that the nozzle opening degree attains the level determined by the normal VN opening degree map. Engine revolution number NE and fuel supply amount Q may be obtained using any conventional techniques, and thus, detailed description thereof is not provided here.

The target boost pressure map shown in Fig. 4 determines the target boost pressure (P(A) < P(B) < ... < P(Z)) from engine revolution number NE and fuel supply amount Q. With a greater engine revolution number NE and a greater fuel supply amount Q, i.e., with a greater load of engine 100, the target boost pressure is higher. ECU 400 calculates a difference ΔPIM (ΔPIM = target boost pressure - PIM) between the target boost pressure and the boost pressure PIM detected by boost pressure sensor 406.

The corrected opening degree map shown in Fig. 5 determines a correction value of the nozzle opening degree from the difference ΔPIM (PIM(1) < PIM(2) < PIM(3) < PIM(4) ...) between the target boost pressure and boost pressure PIM. ECU 400 controls actuator 240 so that the nozzle opening degree attains the level corresponding to the nozzle opening degree determined by the normal VN opening degree map added with the correction value determined by the corrected opening degree map.

The estimated discharge air temperature map in Fig. 6 shows the relation among engine revolution number NE, fuel supply amount Q and the discharge air temperature TC (TC(1) > TC(2) > TC(3) > TC(4) > ...) in the case where there is no caulking or clogging of intercooler 300, i.e., when both compressor 230 and intercooler 300 are normal. This map stores values detected in advance as experimental values. ECU 400 uses this estimated discharge air temperature map to obtain the estimated discharge air temperature (discharge air temperature in the normal state) TC(X) from engine revolution number NE and fuel supply amount Q.

In place of the discharge air temperature map of Fig. 6, a map showing the relation among the intake air amount GA, boost pressure PIM and discharge air temperature TC, as shown in Fig. 7, may be stored in memory 401.

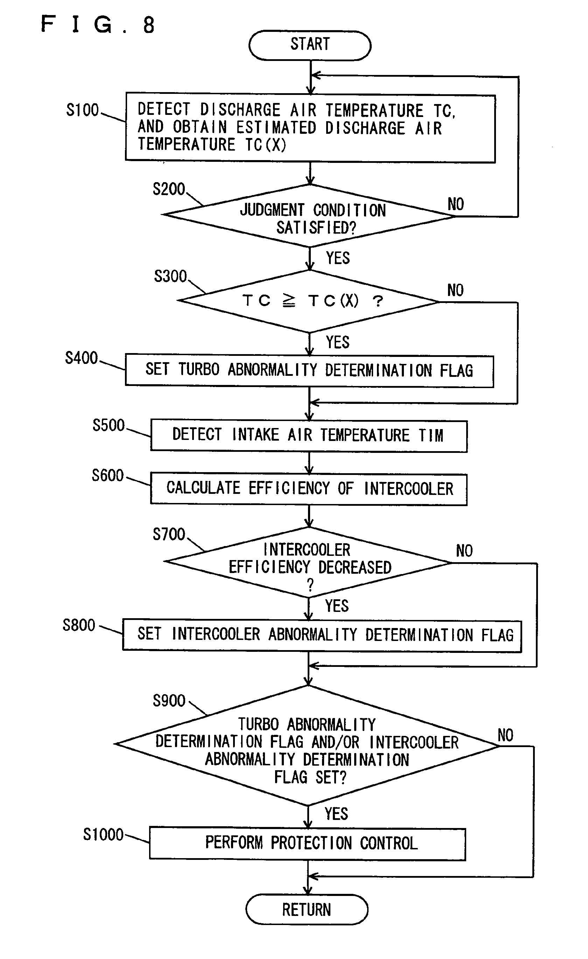

Hereinafter, a control structure of a program executed by ECU 400 in the abnormality determination device for an engine system according to the present embodiment will be described with reference to Fig. 8.

In step (hereinafter, abbreviated as "S") 100, ECU 400 detects discharge air temperature TC. ECU 400 obtains estimated discharge air temperature TC(X) using the estimated discharge air temperature map.

In S200, ECU 400 determines whether a judgment condition is satisfied. Here, the judgment condition is a condition with which it can be determined that the vehicle runs stably, which may be, e.g., that discharge air temperature TC detected remains unchanged for more than a predetermined period of time. If the judgment condition is satisfied (YES in S200), the process goes to S300. If not (NO in S200), the process returns to S100.

In S300, ECU 400 determines whether discharge air temperature TC is higher than estimated discharge air temperature TC(X). If discharge air temperature TC is higher than estimated discharge air temperature TC(X) (YES in S300), the process goes to S400. If not (NO in S300), the process goes to S500.

In S400, ECU 400 sets a turbo abnormality determination flag. In S500, ECU 400 detects intake air temperature TIM. In S600, ECU 400 calculates cooling efficiency of intercooler 300 (intercooler 300 cooling efficiency (%) = (discharge air temperature TC - intake air temperature TIM) / discharge air temperature TC × 100) from discharge air temperature TC and intake air temperature TIM.

In S700, ECU 400 determines whether the cooling efficiency of intercooler 300 has been decreased. For determination as to whether the cooling efficiency of intercooler 300 is decreased or not, the relation between discharge air temperature TC and the cooling efficiency of intercooler 300 in the absence of clogging of intercooler 300 (when intercooler 300 is normal) may be prestored as a map in memory 401, and the stored cooling efficiency and the calculated cooling efficiency may be compared. If the cooling efficiency of intercooler 300 has been decreased (YES in S700), the process goes to S800. If not (NO in S700), the process goes to S900.

In S800, ECU 400 sets an intercooler abnormality determination flag. In S900, ECU 400 determines whether at least one of the turbo abnormality determination flag and the intercooler abnormality determination flag has been set. If so (YES in S900), the process goes to S 1000. If not (NO in S900), the process is terminated.

In S1000, ECU 400 carries out protection control. Here, the protection control refers to the control to decrease boost pressure PIM so as to lower discharge air temperature TC. Specifically, the nozzle opening degree is opened (increased), the target boost pressure is lowered, or the minimum value of the nozzle opening degree is increased.

Hereinafter, an operation of ECU 400 in the abnormality determination device for an engine system according to the present embodiment based on the structure and flowchart above will be described.

When discharge air temperature TC is detected by discharge air temperature sensor 404, and estimated discharge air temperature TC(X) is obtained using the estimated discharge air temperature map (S100), determination is made as to whether the judgment condition is satisfied (S200). Here, it is determined that the judgment condition is satisfied when, e.g., detected discharge air temperature TC remains unchanged for more than a predetermined period of time, indicating that the vehicle runs stably (YES in S200). Otherwise (NO in S200), steps S100 and S200 are repeated until the judgment condition is satisfied (YES in S200).

When the judgment condition is satisfied (YES in S200), determination is made as to whether discharge air temperature TC is higher than estimated discharge air temperature TC(X) (S300). Here, if at least one of caulking and intercooler clogging has occurred, boost pressure PIM is decreased from a target boost pressure, and thus, correction is made to reduce the nozzle opening degree. With the decreased nozzle opening degree, the number of revolutions of compressor 230 increases, and the pressure of the air compressed by compressor 230 increases. Discharge air temperature TC then becomes higher than estimated discharge air temperature TC(X) (YES in S300), and the turbo abnormality determination flag is set (S400). Otherwise (NO in S300), the turbo abnormality determination flag is not set.

When intake air temperature TIM is detected (S500), the cooling efficiency of intercooler 300 is calculated (S600). Clogging of intercooler 300 due to, e.g., impurities contained in the compressed air (discharge air) discharged from compressor 230 degrades efficiency of intercooler 300, resulting in a smaller difference between discharge air temperature TC and intake air temperature TIM. As such, the cooling efficiency of intercooler 300 is decreased.

For determination as to whether the cooling efficiency of intercooler 300 has been decreased or not, a map showing the relation between discharge air temperature TC and the cooling efficiency of intercooler 300 in the absence of clogging of intercooler 300 (when intercooler 300 is normal), for example, may be stored in memory 401. If the calculated cooling efficiency of intercooler 300 is lower than the stored cooling efficiency of intercooler 300 (i.e., when the cooling efficiency of intercooler 300 is decreased) (YES in S700), the intercooler abnormality determination flag is set (S800). Otherwise (NO in S700), the intercooler abnormality determination flag is not set.

If at least one of the turbo abnormality determination flag and the intercooler abnormality determination flag has been set (YES in S900), the protection control to lower boost pressure PIM is carried out so as to decrease discharge air temperature TC (S1000). Specifically, the nozzle opening degree is opened (increased), the target boost pressure is lowered, or the minimum value of the nozzle opening degree is increased. If the turbo abnormality determination flag and the intercooler abnormality determination flag are both not set (NO in S900), no caulking or intercooler clogging has occurred, so that normal control is performed.

As described above, in the abnormality determination device for an engine system according to the present embodiment, the ECU determines that the compressor is abnormal in the case where discharge air temperature TC detected by the discharge air temperature sensor is higher than the estimated value TC(X) of the discharge air temperature obtained using the estimated discharge air temperature map. The ECU calculates the cooling efficiency of the intercooler based on discharge air temperature TC detected by the discharge air temperature sensor and intake air temperature TIM detected by the intake manifold temperature sensor, and determines that the intercooler is abnormal when the cooling efficiency is decreased. Accordingly, it is possible to determine an abnormality of the compressor due to caulking and an abnormality of the intercooler due to clogging.

### Second Embodiment

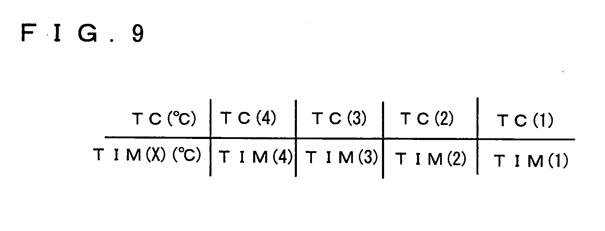

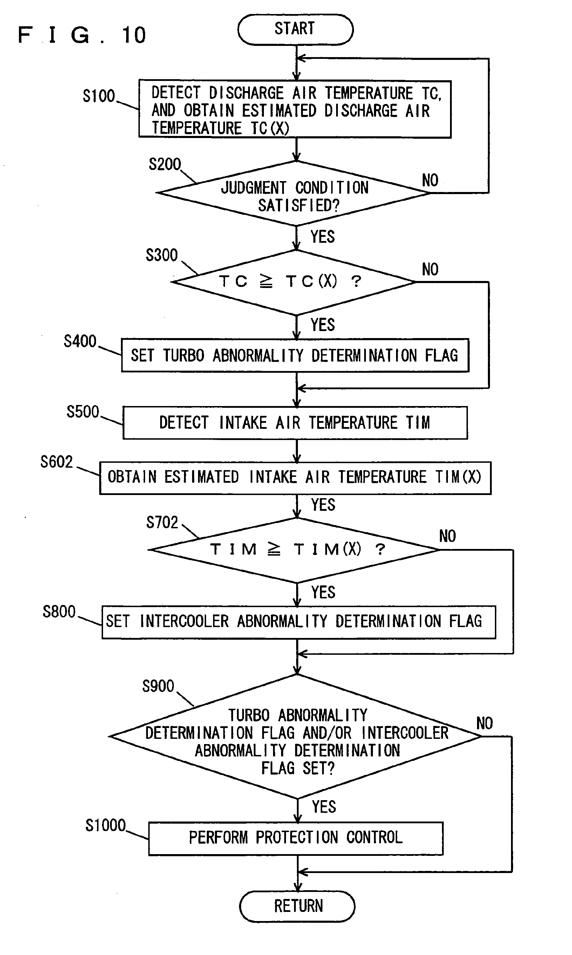

An abnormality determination device for an engine system according to a second embodiment of the present invention is now described with reference to Figs. 9 and 10. In the first embodiment described above, the cooling efficiency of the intercooler has been calculated to determine an abnormality of the intercooler. In the present embodiment, an estimated intake air temperature TIM(X) is obtained from discharge air temperature TC detected by discharge air temperature sensor 404, and comparison is made between this estimated intake air temperature TIM(X) and intake air temperature TIM detected by intake manifold temperature sensor 408 to determine an abnormality of the intercooler.

Other than the above, the hardware configuration and the function of the present embodiment are identical to those of the first embodiment, and thus, detailed description thereof is not repeated here.

Referring to Fig. 9, a map for determining an abnormality of the intercooler stored in memory 401 of ECU 400 in the abnormality determination device for an engine system according to the present embodiment is described. In the present embodiment, memory 401 stores a map of estimated intake air temperature, in addition to the maps in the first embodiment as described above.

The estimated intake air temperature map in Fig. 9 shows the relation between discharge air temperature TC detected by discharge air temperature sensor 404 and an estimated intake air temperature TIM(X). This estimated intake air temperature TIM(X) (TIM(1) > TIM(2) > TIM(3) > TIM(4)) corresponds to intake air temperature TIM detected and stored as experimental values in the state where there is no clogging of intercooler 300.

Referring to Fig. 10, a control structure of a program executed by ECU 400 in the abnormality determination device for an engine system according to the present embodiment is described. The same steps as those executed by ECU 400 in the first embodiment above are denoted by the same reference characters, and detailed description thereof is not repeated here.

In S602, ECU 400 uses discharge air temperature TC detected by discharge air temperature sensor 404 to obtain estimated intake air temperature TIM(X) from the estimated intake air temperature map.

In S702, ECU 400 determines whether intake air temperature TIM detected by intake manifold temperature sensor 408 is higher than estimated intake air temperature TIM(X). If intake air temperature TIM is higher than estimated intake air temperature TIM(X) (YES in S702), the process goes to S800. If not (NO in S702), the process goes to S900.

An operation of ECU 400 in the abnormality determination device for an engine system according to the present embodiment based on the above-described structure and flowchart is now described. For the operation identical to that of ECU 400 of the first embodiment, detailed description thereof is not repeated here.

When intake air temperature TIM is detected (S500), estimated intake air temperature TIM(X) is obtained (S602). At this time, if intercooler 300 suffers clogging due to, e.g., impurities contained in the compressed air (discharge air) discharged from compressor 230, the cooling efficiency of intercooler 300 is degraded, and intake air temperature TIM is higher than estimated intake air temperature TIM(X) (intake air temperature TIM in the normal state).

If intake air temperature TIM is higher than estimated intake air temperature TIM(X) (intake air temperature TIM in the normal state) (YES in S702), the intercooler abnormality determination flag is set (S800). Otherwise (NO in S700), the intercooler abnormality determination flag is not set.

As described above, according to the abnormality determination device for an engine system of the present embodiment, the ECU obtains estimated intake air temperature TIM(X) from discharge air temperature TC detected by discharge air temperature sensor 404 and the estimated intake air temperature map. If intake air temperature TIM is higher than estimated intake air temperature TIM(X), the ECU determines that the intercooler is abnormal due to occurrence of clogging. With this configuration as well, the same effects as in the first embodiment above can be obtained.

Although the present invention has been described and illustrated in detail, it is clearly understood that the same is by way of illustration and example only and is not to be taken by way of limitation, the spirit and scope of the present invention being limited only by the terms of the appended claims.

An ECU carries out a program including the step (S100) of detecting a discharge air temperature TC and obtaining an estimated discharge air temperature TC(X) using an estimated discharge air temperature map, the step (S400) of setting a turbo abnormality determination flag when the discharge air temperature TC is higher than the estimated discharge air temperature TC(X) (YES in S300), the step (S500) of detecting an intake air temperature TIM, the step (S600) of calculating cooling efficiency of an intercooler from the discharge air temperature TC and the intake air temperature TIM, and the step (S800) of setting an intercooler abnormality determination flag when the cooling efficiency of the intercooler is decreased (YES in S700).

## Claims

1. An abnormality determination device for an engine system including a turbocharger (200) having a compressor (230) that is connected to a turbine (210) driven by exhaust gas exhausted from an engine (100) and compressing air to be supplied to said engine (100), and an intercooler (300) for cooling the compressed air discharged from said compressor (230), comprising:
first detection means (404), provided between said compressor (230) and said intercooler (300), for detecting information about the air discharged from said compressor;
second detection means (408), provided between said intercooler (300) and said engine (100), for detecting information about the air cooled by said intercooler (300);
first determination means (400) for determining an abnormality of said compressor (230) based on the information detected by said first detection means (404); and
second determination means (400) for determining an abnormality of said intercooler (300) based on the information detected by said first detection means (404) and the information detected by said second detection means (408).

2. The abnormality determination device for an engine system according to claim 1, further comprising:
storage means (401) for prestoring information about the air discharged from said compressor (230); and
comparison means (400) for comparing the information detected by said first detection means (404) with the information stored in said storage means (401); wherein
said first determination means (400) includes means (400) for determining whether there is an abnormality in said compressor (230) based on a result of the comparison by said comparison means (400).

3. The abnormality determination device for an engine system according to claim 1, further comprising:
estimation means (400) for estimating information about the air cooled by said intercooler (300) based on the information detected by said first detection means (404); and
comparison means (400) for comparing the information detected by said second detection means (408) with the information estimated by said estimation means (400); wherein
said second determination means (400) includes means (400) for determining whether there is an abnormality in said intercooler (300) based on a result of the comparison by said comparison means (400).

4. The abnormality determination device for an engine system according to claim 1, further comprising means (400) for calculating cooling efficiency of said intercooler (300) based on the information detected by said first detection means (404) and the information detected by said second detection means (408), wherein
said second determination means (400) includes means (400) for determining that there is an abnormality in said intercooler (300) when the cooling efficiency of said intercooler (300) is decreased.

5. The abnormality determination device for an engine system according to any of claims 1-4, wherein each of said detection means (404, 408) includes means (404, 408) for detecting at least one of a temperature and a pressure of the air.

6. The abnormality determination device for an engine system according to any of claims 1-5, further comprising control means (400) for controlling said engine system to decrease a boost pressure by said compressor (230) when it is determined that there is an abnormality in at least one of said compressor (230) and said intercooler (300).

7. The abnormality determination device for an engine system according to claim 6, wherein
said turbocharger (200) is a variable nozzle type turbocharger that drives said turbine (210) by the exhaust gas guided by a nozzle (214) having its opening degree changed according to an operating state of said engine system, and
said control means (400) includes means (400) for controlling said engine system to lower the boost pressure by controlling the nozzle opening degree when it is determined that there is an abnormality in at least one of said compressor (230) and said intercooler (300).
